# EUROPÄISCHE PATENTSCHRIFT

(11) **EP 3 512 077 B1**
(45) Veröffentlichungstag und Bekanntmachung des Hinweises auf die Patenterteilung: **17.02.2021**
(21) Anmeldenummer: 18210857.1
(22) Anmeldetag: 06.12.2018
(51) Int. Cl.: H02K 3/52

(54) **ELEKTROMOTOR UND KÜHLERLÜFTER**
ELECTRIC MOTOR AND COOLING FAN
MOTEUR ÉLECTRIQUE ET VENTILATEUR DE REFROIDISSEMENT

(30) Priorität: 15.01.2018 DE 102018200598
(43) Veröffentlichungstag der Anmeldung: 17.07.2019
(73) Patentinhaber: Brose Fahrzeugteile SE & Co. Kommanditgesellschaft, Würzburg, 97076 Würzburg (DE)
(72) Erfinder: HIRSCH, Daniel, 97078 Würzburg (DE); HERMANN, Eugen, 96269 Großheirath (DE); MEHNER, Reinhard, 04720 Döbeln (DE); PFISTER, Martin, 97353 Wiesentheid (DE); SCHULZ, Janik, 97072 Würzburg (DE); Röding, Andreas, 97273 Kürnach (DE); SCHOELE, Rainer, 97274 Leinach (DE)
(74) Vertreter: FDST Patentanwälte

(56) Entgegenhaltungen:
- EP-A2- 1 215 801
- FR-A1- 2 393 455
- JP-A- H06 233 488
- JP-A- 2008 178 211
- JP-A- 2017 046 369
- JP-U- S 538 505
- US-A1- 2014 175 935
- US-A1- 2015 061 452

## Beschreibung

Die Erfindung betrifft einen Elektromotor mit einem um eine in Axialrichtung verlaufende Drehachse drehbar gelagerten Rotor und einen Stator mit radial gerichteten Statorzähnen mit T-förmig erweiterten Pollaschen. Ferner betrifft die Erfindung einen Kühlerlüfter, insbesondere für ein Kraftfahrzeug, mit einem solchen Elektromotor.

Ein bürstenloser Elektromotor umfasst einen drehbar gelagerten Rotor (Läufer) sowie einen feststehenden Stator. Dabei weist der Stator radial, beispielsweise sternförmig, angeordnete Statorzähne auf, zwischen denen jeweils eine Statornut gebildet ist. In diese Statornuten ist eine Statorwicklung in Form einzelner Spulen aufgenommen, welche insbesondere aus einem Draht gewickelt sind. Die miteinander beispielsweise in Stern- oder Dreieckschaltung verschalteten Spulen werden mit einem Wechselstrom zur Erzeugung eines Drehfeldes beaufschlagt. Fer ner umfasst der Rotor beispielsweise Permanentmagnete, deren Magnetfeld mit dem mittels der Spulen erzeugten Drehfeld des Stators wechselwirkt, so dass der Rotor drehangetrieben wird.

Dabei können der Rotor sowie der Stator jeweils als Blechpaket ausgebildet sein, insbesondere um Wirbelstromverluste zu vermeiden. Beispielsweise ist aus der WO 2010/145841 A2 ein Elektromotor mit einem Stator bekannt, der aus einem Blechpaket mit übereinander gestapelten Einzelblechen ausgeführt sein kann. Dieser weist ein umfangsseitiges Joch und eine gerade Anzahl an Statorzähnen auf, die radial nach Innen abstehen. Dabei ist in Umfangsrichtung Jeder zweite Statorzahn wicklungsfrei. Die eine Wicklung tragenden Statorzähne weisen ferner am inneren Zahnende in Umfangsrichtung abstehende Pollaschen auf.

Bei Betrieb eines solchen Elektromotors mit einem ein Blechpaket aufweisenden Stator kann eine (Eigen-)Schwingung des Stators bei bestimmten Drehzahlen angeregt werden. Mit anderen Worten handelt es sich um eine Resonanz. Diese äußert sich nachteilig beispielsweise in einer erhöhten Geräuschentwicklung. Weiterhin ist aufgrund dieser angeregten Schwingungen eine zusätzliche Belastung und ein damit einhergehender Verschleiß der mit dem Stator in Verbindung stehenden Komponenten erhöht.

In der EP 1 215 801 A2 ist eine rotierende elektrische Maschine offenbart, wobei die Zähne deren Stators seitlich und freiendseitig jeweils mit einer Erweiterung und mit einem Stopperelement versehen sind. Mittels der Erweiterungen und den Stopperelementen sind Nuten gebildet, in die Platten eingebracht ist. Eine Harzschicht wird durch Einspritzen von Harz in einen Raum an der Außenfläche der Platte gebildet. Die Platte wird durch den Einspritzdruck des Harzes gegen das Stopperelement gedrückt, sodass eine Dichtung erzeugt ist.

Aus der JP S53 8505 U ist bekannt, dass Brückenelemente aus einem nicht magnetischen Material zwischen den magnetischen Polen eines Stators eingebracht sind.

Das Dokument JP 2017 046369 A offenbart einen Elektromotor mit Versteifungselementen.

Der Erfindung liegt die Aufgabe zugrunde, einen Elektromotor mit verbesserten akustischen Eigenschaften anzugeben. Ferner soll ein Kühlerlüfter mit einem solchen Elektromotor angegeben werden.

Bezüglich des Elektromotors wird die Aufgabe erfindungsgemäß gelöst durch die Merkmale des Anspruchs 1. Hinsichtlich des Kühlerlüfters wird die Aufgabe erfindungsgemäß erfüllt durch die Merkmale des Anspruchs 8. Vorteilhafte Weiterbildungen und Ausgestaltungen sind Gegenstand der Unteransprüche.

Hierzu umfasst der Elektromotor einen um eine in Axialrichtung verlaufende Drehachse drehbar gelagerten Rotor und einen Stator mit einem Blechpaket, welches ein Statorjoch und von diesem radial gerichtete Statorzähne des Stators bildet, wobei die Statorzähne unter Bildung von sich in Umfangsrichtung des Stators erstreckenden Pollaschen (Zahnspitzen) zahnfußseitig (freiendseitig, polschuhseitig) T-förmig erweitert sind. Die Pollaschen bilden dabei jeweils eine nachfolgend als Anlageschulter bezeichnete Anlagefläche oder -kontur.

Ferner sind zwischen den Statorzähnen sogenannte Statornuten zur Aufnahme von Spulen einer Statorwicklung und zwischen einander zugewandten Pollaschen jeweils ein Nutenschlitz gebildet. Es ist eine Anzahl von Versteifungselement vorgesehen, welche in eine entsprechende Anzahl von Nutenschlitzen eingebracht sind. Die Versteifungselemente sind des Weiteren an den einander zugewandten Pollaschen benachbarter Statorzähne in Radialrichtung mittels der aus diesen Pollaschen gebildeten Anlageschultern gehalten.

Unter einer Anzahl von Versteifungselementen sind hierbei ein, zwei oder mehrere Versteifungselemente zu verstehen, Beispielsweise ist jeweils ein Versteifungselement in Umfangsrichtung in jeden zweiten Nutenschlitz eingebracht. Vorzugsweise entspricht die Anzahl der Versteigungselemente jedoch der Anzahl der Nutenschlitze, so dass In jeden Nutenschlitz ein Versteifungselement eingebracht ist.

Unter T-förmig erweitert wird verstanden, dass die Statorzähne einen T-förmigen Querschnitt in einer Ebene senkrecht zur Axlalrichtung aufweisen. Die sich vom Statorjoch entlang der Radialrichtung erstreckenden Statorzähne bilden dabei den vertikalen T-Schenkel (Zahnschaft) der T-Form, während die in Umfangsrichtung, also senkrecht zur Axial- und zur Radialrichtung orientierten Pollaschen den horizontalen T-Schenkel (Fuß) der T-Form bilden. Dabei ist der horizontalen T-Schenkel freiendseitig, d.h. an der dem Rotor bzw. dem Spalt zwischen diesem und dem Stator zugewandten Seite des Statorzahns, angeordnet. Insbesondere bilden die horizontalen T-Schenkel dabei jeweils einen Polschuh.

Die Versteifungselemente sind beispielsweise zusätzlich zu dem dargelegten Formschluss in Radialrichtung aufgrund der Anlageschulter zusätzlich kraftschlüssig, insbesondere durch Einpressen und/oder stoffschlüssig, beispielsweise durch Verkleben oder (Ultraschall-) Schweißen, mit den entsprechenden Pollaschen gefügt.

Besonders vorteilhaft ist mittels der Versteifungselemente eine Versteifung des Stators realisiert. Die Erfindung geht dabei von der Überlegung aus, dass das bzw die Versteifungselemente hierbei eine Kraft, insbesondere in Umfangsrichtung, auf die Statorzähne und auf diese Weise auf den gesamten Stator bewirken, so dass eine Schwingung des Stators gedämpft und/oder eine Eigenfrequenz der Eigenschwingung des Stators gezielt in einen Frequenzbereich verschoben, insbesondere erhöht, ist, in welchem eine Schwingungsanregung nicht zu erwarten ist. Zusammenfassend ist auf diese Weise die Akustik des Elektromotors verbessert und ein aufgrund der Schwingung auftretender Verschleiß verhindert.

Zweckmäßigerweise werden die Versteifungselemente nach dem Einbringen der Spulen, beispielsweise mittels einer sog. Nadelwicklung, in die entsprechenden Nutenschlitze eingebracht. Auf diese Weise ist es weiterhin ermöglicht, dass die Wicklung bzw. das Werkzeug, welches die Wicklung durchführt, durch die Nutenschlitze verfährt. Insbesondere ist somit eine Änderung des Blechpakets des Stators nicht notwendig. Das Blechpaket des Stators kann also mit den bisherigen Verfahren und dazu verwendeten (Stanz-)Werkzeugen hergestellt werden.

Gemäß einer vorteilhaften Weiterbildung ist das Blechpaket aus einer Anzahl von Einzelblechen gebildet. Dabei weist jedes Einzelblech einen ringförmigen Jochabschnitt und mit diesem einteilige, also monolithisch angeformte, radial gerichtete Blechzähne auf, die zahnfußseitig unter Bildung von sich in Umfangsrichtung des Stators erstreckenden Blechlaschen T-förmig erweitert sind. Das Statorjoch ist aus den Jochabschnitten der Einzelbleche, die Statorzähne aus den Blechzähnen der Einzelbleche und die Pollaschen aus den Blechlaschen der Einzelbleche gebildet.

Vorteilhafterweise ist ein derartiger Stator mit aus einteiligen Einzelblechen gebildetem Blechpaket mit vergleichsweise geringem Aufwand herstellbar und auch hergestellt. Beispielsweise werden bei Statoren im sog. Stern-Joch-Design bei deren Herstellung das Joch und die Statorzähne als einzelne Komponenten aus den Einzelblechen gestanzt und müssen anschließend miteinander gefügt werden. Bei einem bevorzugt mit einteiligen Einzelblechen paketierten Stator entfällt dieser Schritt, weshalb sowohl ein das Verfahren als auch zur Herstellung notwendige Werkzeuge des Stators kostensparend sind.

Gemäß einer vorteilhaften Ausgestaltung weisen die Pollaschen freiendseitig eine in Umfangsrichtung offene und sich in Axialrichtung erstreckende Nut mit zwei in Radialrichtung zueinander beabstandeten Nutenwänden auf. Eine der Nutenwände bildet die Anlageschulter für das Versteifungselement in einer Radialrichtung, während dann die andere Nutenwand die Anlageschulter für das Versteifungselements in der entgegengesetzten Radialrichtung bildet.

Die parallel zueinander orientierten Nutenwände erstrecken sich in einer mittels der Umfangrichtung an der Stelle der Nut und der Axialrichtung aufgespannten Ebene. Ein die beiden Nutenwände verbindender Nutenboden erstreckt sich entsprechend in einer mittels der Axialrichtung und der Radialrichtung aufgespannten Ebene. Mit anderen Worten fassen die Nuten jeweils in Umfangsrichtung in den Statorzahn ein

Gemäß einer geeigneten Weiterbildung weist der Stator, d.h. bevorzugt lediglich dessen Blechpaket eine Kunststoffumspritzung auf, mittels welcher die Anlageschulter bzw. die Nut vollständig oder teilweise gebildet ist. Bei der teilweisen Ausbildung der Nut durch die Kunststoffumspritzung ist die statorjochseitige Nutenwand mittels der Kunststoffumspritzung und die rotorseitige Nutenwand mittels des Blechpakets des Stators gebildet. Beispielsweise weist das Blechpaket des Stators hierzu eine, insbesondere L-förmige, Einkerbung an den umfangsseitigen Enden der Pollaschen an deren dem Joch zugewandten Seite auf. Die Einkerbung ist dabei zur Bildung der Nut von der Kunststoffumspritzung ausgespart oder ausgenommen.

Bei vollständiger Bildung der Nut mittels der Kunststoffumspritzung sind beide Nutenwände mittels der Kunststoffumspritzung gebildet. Bei dieser Ausführung ist eine Änderung der Form des Blechpakets nicht notwendig.

In einer zweckmäßigen Ausgestaltung ist das Versteifungselement als Platte oder Plättchen, d. h. als platten- oder plättchenartiges Bauteil ausgeführt. Insbesondere ist das Versteifungselement rechteckförmig. Die flächigen Seiten der Platte werden im Folgenden als Breitseiten (Längsseite) und die an diese angrenzenden Seiten als erste und zweite Schmalseiten (Querseite) bezeichnet. Vorzugsweise weist die Breitseite und entsprechend die erste Schmalseite dabei eine Ausdehnung (Länge) auf, welche der Ausdehnung des Nutenschlitzes in Axialrichtung entspricht. Das Versteifungselement wird derart in den Nutenschlitz eingebracht, dass die ersten Schmalseiten mit der Länge des Nutenschlitzes an den Pollaschen angeordnet sind.

Sofern Nuten in den jeweiligen Pollaschen ausgebildet sind, sitzt das Versteifungselement dort vorzugsweise nach Art einer Spundung ein und ist derart formschlüssig bezüglich der Radialrichtung gefügt. Dabei ist an den einander gegenüberliegenden Schmalseiten des plattenförmigen Versteifungselements jeweils eine zur Nut komplementäre Fügekontur angeordnet. Alternativ weist das plattenförmige Versteifungselement eine Ausdehnung (Dicke) senkrecht zur Breitseite auf, welche der Nutausdehnung in Radialrichtung entspricht. Allenfalls ist zweckmäßigerweise ein Einpressmaß zugelassen,

Das Versteifungselement ist beispielsweise mehrteilig ausgeführt, indem mehrere Plattenförmige Teile vorgesehen sind. Dabei sind entweder deren Breitseiten einander zugewandt, oder alternativ sind deren zweiten Schmalseiten einander zugewandt. Im Montagezustand sind die Teile des Versteigungselements also in Radialrichtung hintereinander bzw. in Axialrichtung übereinander angeordnet.

Vorzugsweise ist das Versteifungselement jedoch einteilig und symmetrisch ausgeführt. Erfindungsgemäß ist das Versteifungselement zur Längsachse (zwischen den Breit- bzw. Längsseiten) und zur Querachse (zwischen den Schmal- bzw. Querseiten) spiegelsymmetrisch ausgeführt. Mit anderen Worten ist das Versteifungselement vorzugsweise spiegelsymmetrisch bezüglich zweier Ebenen ausgeführt, welche jeweils durch die Mittelsenkrechte der Breitseite und parallel zu jeweils einer von zwei aneinandergrenzenden Schmalseiten verlaufen. Aufgrund der Symmetrie und der einteiligen Ausführung ist die Montage des Versteifungselements in unterschiedlichen Orlentlerungen ermöglicht und identisch und somit besonders fehlersicher. Deshalb ist eine Montage des Versteifungselements mit falscher Orientierung vorteilhaft vermieden. Das Versteifungselement kann somit für die Montage kostensparend als Schüttgut bereit gestellt werden.

In einer geeigneten Ausgestaltung ist das Versteifungselement aus einem nicht magnetischen Material gebildet. Insbesondere wird hierunter eine magnetische Permeabilität des Materials kleiner 5 (µᵣ < 5), vorzugsweise gleich 1 (µᵣ = 1), und eine elektrische Leitfähigkeit (sigma) kleiner 40 Siemens/Meter (σ < 40 S · m⁻¹), vorzugsweise 1,4 Siemens/Meter (σ = 1,4 S · m⁻¹), verstanden.

Beispielsweise wird hierbei ein Kunststoff wie Polyamid (PA6 oder PA66) oder Polybutylenterephthalat (PBT) herangezogen. Diese als Kunststoffvariante bezeichnete Ausführung ist vorteilhafterwiese zusätzlich nicht elektrisch leitfähig, so dass im Versteifungselement keine Wirbelstromverluste auftreten. Wird das Versteifungselement eingepresst, ist des Weiteren eine vergleichsweise geringe Einpresskraft notwendig, weshalb produktionsbedingte Schäden vermieden werden. Alternative ist das Versteifungselement aus einem nicht magnetischen und vorzugsweise korrosionsbeständigen Edelstahl wie X5CrNi18-10 gebildet. Im Vergleich zur Verwendung magnetischer Materialien für das Versteifungselement, erfolgt derart an den Pollaschen kein magnetischer Schluss, weshalb vorteilhafterweise eine Nutzleistung des Motors nicht verringert wird.

Die Wahl des Materials des Versteifungselements wirkt zudem auf die akustischen Eigenschaften des Stators ein. So werden insbesondere bei der Kunststoffvariante des Versteifungselements auftretende Schwingungen des Stators vergleichsweise stark gedämpft. Mittels der Edelstahlvariante ist dagegen eine Steifigkeit des Stators erhöht und eine Anregung einer Schwingung verringert.

Des Weiteren weist das Versteifungselement an zumindest einer der stirnseitigen Schmalseiten eine weitere Fügekontur für einen Formschluss bezüglich der Axialrichtung mit der jeweiligen Pollasche auf. Vorzugsweise weisen beide stirnseitigen Schmalseiten jeweils eine Fügekontur auf. Die stirnseitigen Schmalseiten sind diejenigen Schmalseiten, welche nicht zur Herstellung der Fügung nach Art einer Spundung mit den Pollaschen ausgebildet bzw. im Montagezustand des Versteifungselements im Elektromotor senkrecht zur Axialrichtung orientiert sind.

Dabei ist die Fügekontur als Zapfen ausgebildet, welche im Montagezustand einen axialen Hintergriff mit den jeweiligen Pollaschen ausbildet. Beispielsweise stehen die Zapfen bei einer Ausführung des Versteifungselements in der Edelstahlvariante senkrecht zur entsprechenden stirnseitigen Schmalseite. Nach dem Einbringen des Versteifungselements in den Nutenschlitz werden die Zapfen zur Ausbildung des axialen Hintergriffs in Umfangsrichtung verbogen. In der Kunststoffvariante sind die Zapfen des Versteifungselements beispielsweise endseitig in Umfangsrichtung voneinander weg geneigt. Im Zuge der Montage werden die Zapfen federelastisch (aufeinander zu) ge- oder verbogen, so dass diese bei vollständigem Einbringen die entsprechende Pollasche des Statorzahns zumindest mit einer axial gerichteten Komponente hinterfassen.

Vorzugsweise zusätzlich ist die das Versteifungselement aufnehmende Nut in Axialrichtung nicht durchgehend. Hierbei weist die Nut an einer deren Endseiten bezüglich der Axialrichtung eine Anlage für das Versteifungselement auf. Das Versteifungselement wird im Zuge der Montage dann von der anderen Endseite her in die Nut eingebracht. Dabei hintergreift die Fügekontur die Anlage, so dass der Formschluss in Axialrichtung vergleichsweise zuverlässig ausgebildet ist,

Das Versteifungselement ist also in Folge des Formschlusses gegen ein Lösen gesichert, was hinsichtlich der Sicherheit bei Betrieb des Elektromotors für einen Benutzer sowie zur Vermeidung einer Beschädigung des Elektromotors oder anderer Komponenten, welche in der Nähe des Elektromotors angeordnet sind, besonders vorteilhaft ist.

In vorteilhafter Ausgestaltung ist das Versteifungselement mit mindestens einer in die jeweilige Statomut mündenden Durchgangsöffnung versehen. Insbesondere weist das Versteifungselement eine als Aussparung ausgeführte oder mittels einer Bohrung eingebrachte Durchgangsöffnung auf, welches durchgängig ist und senkrecht zur Breitseite des Versteifungselements verläuft. Vorzugsweise weist das Versteifungselement mehrere solcher Durchgangsöffnungen auf. Die Durchgangsöffnungen sind beispielsweise kreisrund, langlochartig oder schlitzförmig. Mittels dieser Durchgangsöffnung sind zum einen eine Luftzirkulation durch das Versteifungselement ermöglicht und somit eine Kühlung verbessert. Des Weiteren können eventuell in den Elektromotor eingetretene Schmutzpartikel oder Wasser durch diese Durchgangsöffnungen erleichtert aus der Statornut austreten, Zum Anderen dienen die Durchgangsöffnungen bei einer Ausführung des Versteifungselements, welches elektrisch leitfähig ist, zur Verringerung bzw. Vermeidung von Wirbelstromverlusten.

Gemäß einer vorteilhaften Ausbildung weist ein Kühlerlüfter, insbesondere eines Kraftfahrzeugs, einen Elektromotor in einen der oben beschriebenen Varianten auf, der insbesondere ein Lüfterrad rotatorisch antreibt. Insbesondere weist dabei der erfindungsgemäße Elektromotor des Kühlerlüfters eine der Anzahl der Statornuten entsprechende Anzahl von Versteifungselementen auf, welche mittels an Pollaschen der Statorzähne angeordneten Anlageschultern in den entsprechenden Nutenschlitzen gehalten werden. Dabei ist insbesondere die Nut teilweise oder vollstandig mittels einer Kunststoffumspritzung des Stators gebildet. Besonders vorteilhaft sind mittels des Versteifungselements akustische Eigenschaften des Kühlerlüfters verbessert. So ist folglich eine als vergleichsweise angenehm empfundene Akustik bei Betrieb des Kühlerlüfters realisiert.

Nachfolgend werden Ausführungsbeispiele der Erfindung anhand einer Zeichnung näher erläutert. Darin zeigen:
- Fig. 1: in einer Explosionsdarstellung einen Kühlerlüfter mit einem Elektromotor, welcher einen als Innenläufer ausgebildeten Rotor und einen Stator aufweist, dessen Statorzähne sich radial zum Rotor hin erstrecken, wobei die Statorzähne freiendseitig unter Bildung von Pollaschen erweitert sind,
- Fig. 2a,b: in einer Draufsicht bzw. in vergrößertem Ausschnitt in perspektivischer Ansicht das Blechpaket des Stators, welches aus einer Anzahl von Einzelblechen gebildet Ist, wobei die Einzelbleche jeweils einem Jochabschnitt aufweisen von dem sich monolithisch an den Jochabschnitt angeformte Statorzähne radial erstrecken,
- Fig. 3: in perspektivischer Ansicht den Stator mit Blechpaket und mit einer Kunststoffumspritzung, wobei in zwischen den Pollaschen gebildeten Nutenschlitzen jeweils ein Versteifungselement zur Versteifung des Stators eingebracht und mittels der Pollaschen gebildeten Anlageschultem gehalten sind,
- Fig. 4: in vergrößertem Maßstab den Bereich IV der Fig. 3, wobei das Versteifungselement an dessen stirnseitigen Schmalseiten jeweils eine als Zapfen ausgebildete Fügekontur aufweist, die mit den Pollaschen im Montagezustand einen axialen Hintergriff ausbilden.
- Fig. 5: den Stator gemäß der Fig. 4 mit herausgenommenen Versteifungselementen, wobei der Stator im Bereich der Pollaschen eine in Umfangsrichtung offene Nut zur Aufnahme des Versteifungselements aufweist.
- Fig. 6: in perspektivischer Ansicht das Versteifungselement mit in dessen Breitseite eingebrachten Durchgangsöffnungen, mit senkrecht zur stirnseitigen Schmalseite emporstehenden Zapfen und mit an diese Schmalseite angrenzenden zweiten Schmalseiten, und
- Fig. 7a,b: in Draufsicht auf dessen Breitseite bzw. in perspektivischer Ansicht eine alternative Ausgestaltung des Versteifungselements, mit federelastischen Zapfen an den stimseitigen Schmalseiten und mit jeweils einer Fügekontur an zweiten Schmalseiten.

Einander entsprechende Teile sind in allen Figuren mit den gleichen Bezugszeichen versehen.

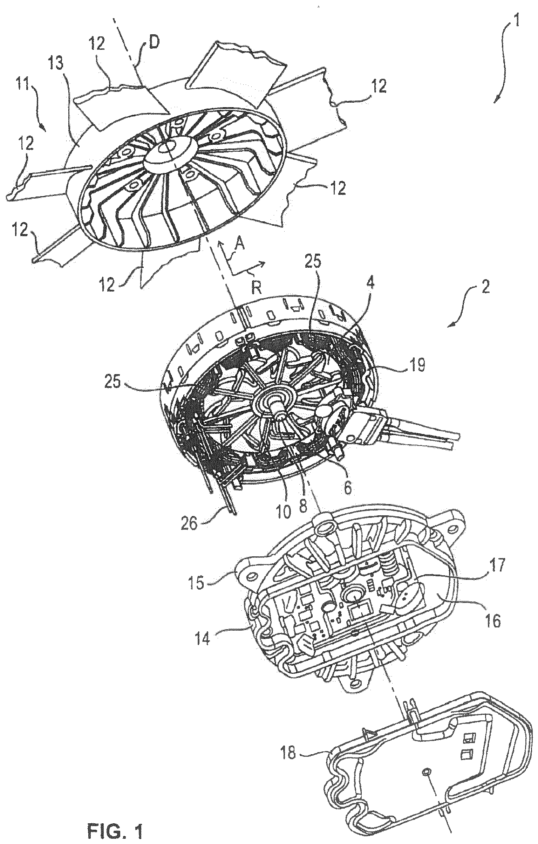

Fig. 1 zeigt in einer Explosionsdarstellung einen Kühlerlüfter 1, welcher insbesondere für eine Verwendung in einem nicht weiter dargestellten Kraftfahrzeug vorgesehen ist, mit einem Elektromotor 2 mit einem Rotor 4 und mit einem Stator 6. Der Rotor 4 ist um eine Drehachse D mittels eines Achsstifts 8 rotatorisch gelagert, wobei die Drehachse D in einer Axialrichtung A verläuft. Der Achsstift 8 ist dabei mittels Lagern 10, welche jeweils endseitig am Achsstift 8 angeordnet sind, gelagert. In der Zeichnung ist der Rotor 4 als ein Innenläufer ausgebildet, d.h. der Stator 6 umfasst den Rotor 4 außenseitig bezüglich einer zur Axialrichtung A senkrecht verlaufenden Radialrichtung R. Jedoch ist in einer nicht weiter dargestellten Variante des erfindungsgemäßen Elektromotors 2 der Rotor 4 als ein Außenläufer ausgebildet. Hierbei gelten die im Folgenden dargelegten Ausführungen in analoger Weise.

Der Rotor 4 steht mit einem Lüfterrad 11 in Antriebsverbindung. An dessen Außenumfang weist dieses Luftleitschaufeln 12 auf, welche zum Zwecke einer verbesserten Übersicht lediglich ausschnittsweise dargestellt sind. Das Lüfterrad 11 weist eine zentrale Kappe 13 auf, welche am Rotor 4 des Elektromotors 2 befestigt ist.

Auf der dem Lüfterrad 11 abgewandten Stirnseite des Elektromotors 2 ist ein Motorträger 14 mit Flanschen 15 zur Befestigung des Kühlerlüfters angeordnet. Der Motorträger 14 weist des Weiteren auf dessen dem Lüfterrad 11 abgewandten Seite ein Elektronikfach 16 für eine Motorelektronik 17 auf, welches Im Montagezustand mittels eines Elektronikfachdeckels 18 abgedeckt ist.

Der Stator 6 weist ein im Wesentlichen hohlzylinderförmiges Statorjoch 19 auf Von diesem erstrecken sich radial zum Rotor 4 hin dessen Statorzähne 20. Die Statorzähne sind dabei freiendseitig, also an der dem Rotor 4 zugewandten Ende, in einer Umfangsrichtung U bezüglich des Stators 6. mit anderen Worten senkrecht zur Axialrichtung A und senkrecht zur Radialrichtung R, unter Bildung von Pollaschen 21 erweitert. Folglich bilden die Statorzähne 20 in einer Ebene senkrecht zur Axialrichtung A eine T-Form, deren horizontaler T-Schenkel mittels der Pollaschen 21 gebildet Ist.

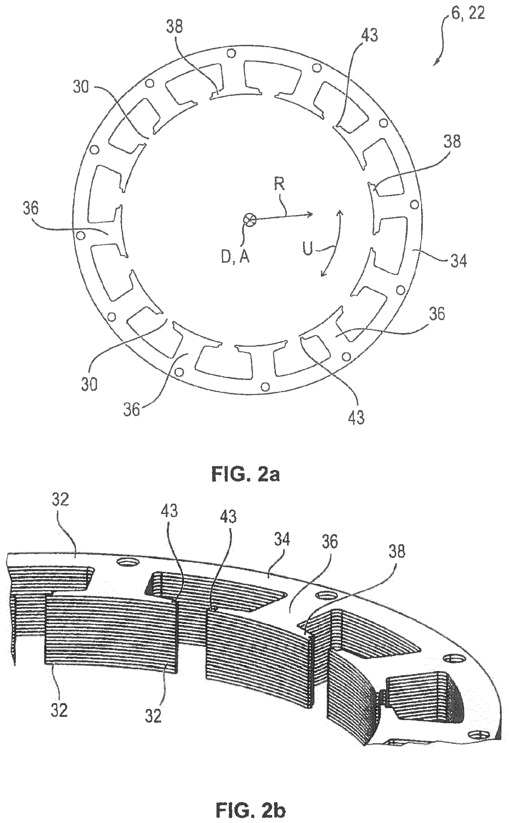

Hierbei weist der Stator 6 ein Blechpaket 22, welches in Fig 2a und Fig. 2b dargestellt ist, sowie eine das Blechpaket 22 umfassende (Kunststoffmantel) Kunststoffumspritzung 23 auf. Dabei sind die Statorzähne 20 an der dem Rotor zugewandten Seite nicht mit der Kunststoffumspritzung 23 versehen. Die erweiterten Statorzähne 20 sind als Polschuhe ausgebildet.

Zwischen benachbarten Statorzähnen 20 ist dabei jeweils eine Statornut 24 gebildet, in welcher eine Spule 25 einer Statorwicklung aufgenommen ist. Die Statorwicklung wird dabei mittels Anschlüssen 26 zur Erzeugung eines Drehfeldes entsprechend bestromt. Die schlitzförmige Öffnung, welche zwischen den Pollaschen 21 gebildet ist und in Radialrichtung R die entsprechende Statornut 24 mit einem zwischen dem Rotor 4 und dem Stator 6 gebildeten Luftspalt verbindet, wird hierbei als Nutenschlitz 30 bezeichnet. Mit anderen Worten Ist zwischen einander zu gewandten Pollaschen 21 jeweils ein Nutenschlitz 30 gebildet.

Die Figuren 2a,b zeigen das Blechpaket 22 des Stators 6. Dieses ist aus einer Anzahl von Einzelbelchen 32 gebildet. Jedes der Einzelbleche weist dabei einen ringförmigen Jochabschnitt 34 und mit diesem einteilig, also monolithisch, Blechzähne 36 auf, welche sich radial vom Jochabschnitt 34 zum Mittelpunkt, mit anderen Worten nach innen, des Jochabschnitts 34 erstrecken. Zahnfußseitig (frelendseitig, innenseitig) sind die Blechzähne 36 in Umfangsrichtung U des Stators 6 unter Bildung von Blechlaschen 38 erweitert, so dass die Blechzähne 36 T-förmig ausgebildet sind. Die Einzelbelche 32 sind zum Blechpaket 22 miteinander gefügt, wobei das Statorjoch 19 aus den Jochabschnitten 34 der Einzelbleche 32, die Statorzähne 20 aus den Blechzähnen 36 und die Pollaschen 21 aus den Blechlaschen 38 gebildet sind.

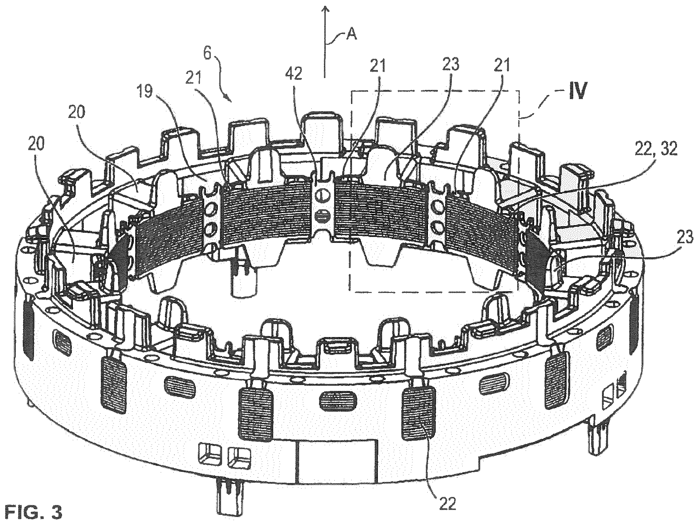

In Fig. 3 ist der Stator 6 mit dem Blechpaket 22 sowie mit der das Blechpaket 22 umfassenden Kunststoffumspritzung 23 dargestellt. Dabei ist in jeden der Nutenschlitze 30 jeweils ein Versteifungselement 42 eingebracht. Die Pollaschen 21 bilden dabei jeweils eine Anlageschulter 43 für die Versteifungselemente 42. Mit anderen Worten werden diese an einander zugewandten Pollaschen 21 benachbarter Statorzähne 20 in Radialrichtung R mittels der Anlageschultern 43 gehalten, wobei die Anlageschultern 43 mittels der entsprechenden Pollaschen 21 gebildet sind. Aufgrund der Versteifungselemente 42 sind die akustischen Eigenschaften des Stators 6 verändert. Insbesondere ist eine Schwingungsanregung des Stators 6 reduziert, eine gegebenenfalls angeregte Schwingung vergleichsweise stark gedämpft und/oder eine (Eigen-)Frequenz der Schwingung des Sta-tors 6 in einen Bereich verschoben, in welchem eine Schwingungsanregung nicht zu erwarten ist.

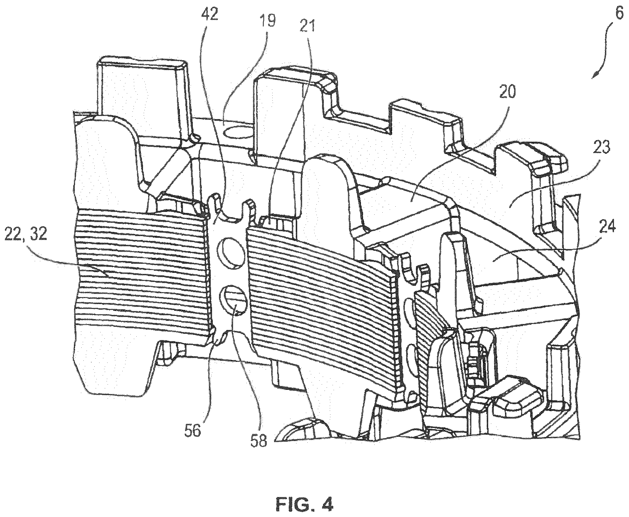

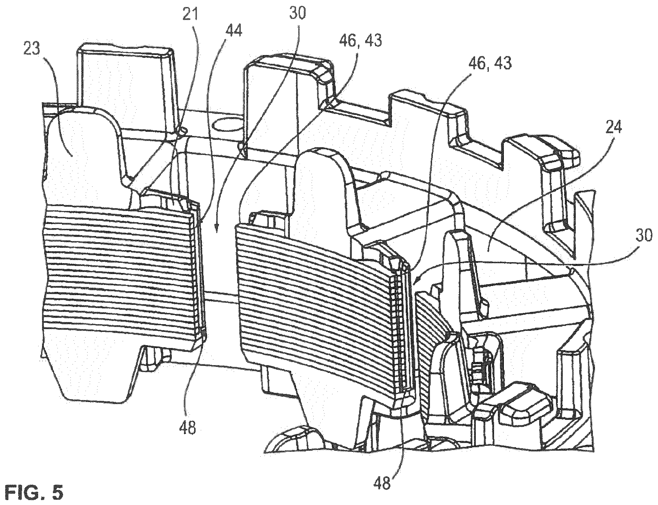

Fig. 4 und Fig. 5 zeigen in vergrößertem Ausschnitt gemäß Fig. 3 benachbarte Statorzähne 20 mit zwischen deren Pollaschen 21 gebildetem Nutenschlltz 30. In Fig. 5 ist dabei das Versteifungselement 42 nicht weiter dargestellt, um das Freiende bezüglich der Umfangsrichtung U der Pollaschen 21 besser erkennbar darzustellen. Der Stator 6 weist im freiendseitigen Bereich der Pollaschen 21 eine in Umfangsrichtung U offene und sich in Axialrichtung A erstreckende Nut 44 auf. Dabei bilden die Nutenwände 46 der Nut 44, welche sich in entlang der Umfangsrichtung U erstrecken, jeweils eine Anlageschulter 43 für das Versteifungselement 42. Im Zuge der Montage des Elektromotors 2 werden die Versteifungselemente 42 jeweils in die entsprechende Nut 44 eingebracht, so dass das Versteifungselement 42 folglich in Radialrichtung R formschlüssig mittels der mittels der Nutenwände 46 gebildeten Anlageschultem 43 im Nutenschlitz 30 gehalten ist.

Zur Bildung der Nut 44 weist das Blechpaket 22 an den Pollaschen 21 freiendseitig bezüglich der Umfangsrichtung U an der dem Statorjoch 19 zugewandten Seite eine Einkerbung auf. Die dem Statorjoch 19 gegenüberliegende Seite der Einkerbung der Pollaschen 21 bildet dabei die dem Luftspalt näherliegende Nutenwand 46 und somit die entsprechende Anlageschulter 43. Wie in Fig. 5 vergleichsweise deutlich erkennbar dargestellt ist, bildet dabei die Kunststoffumspritzung 23 die dem Statorjoch 19 näherliegende Nutenwand 46, während die dem Luftspalt, welcher zwischen dem Stator 6 und dem Rotor 4 gebildet Ist, näherliegende Nutenwand 46 mittels des Blechpakets des entsprechenden Statorzahns 20 gebildet ist. Dabei sind die Nuten 44 in Axialrichtung A nicht durchgehend. An einer deren Endseiten weist die Nut eine weitere, im Folgenden als Anlage 48 bezeichnete Nutenwand auf, welche in einer Ebene senkrecht zur Axialrichtung A verläuft. Diese bildet mit dem Versteifungselement 42 einen Formschluss gegen ein Herauslösen des Versteifungselements 42 in Axialrichtung von der offenen Stirnseite der Nut 44 zur Anlage 48 hin.

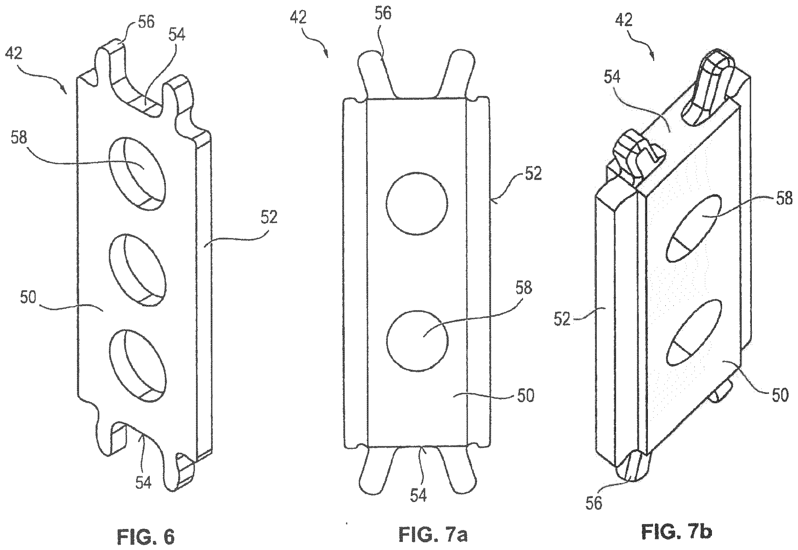

Die als Breitseiten 50 bezeichneten flächigen Seiten des als rechteckförmige Platte ausgeführten Versteifungselements 42 grenzen an als Schmalseiten 52, 54 bezeichnete Seiten der Platte an. Das Versteifungselement 42 ist in Fig. 6 in vergrö-ßertem Maßstab dargestellt. Dabei weist das Versteifungselement 42 eine Ausdehnung (Dicke) senkrecht zu den Breitseite 50 auf, welche dem Abstand der Nutenwände 46 entspricht. Weiterhin weisen die Breitseite 50 und die als "erste" Schmalseiten 52 bezeichnete Schmalseite eine Ausdehnung (Länge) auf, welcher im Wesentlichen der Ausdehnung der Nut 44 in Axialrichtung A entspricht. Beide zweiten, stirnseitigen Schmalseiten 54, welche an die ersten Schmalselten 52 angrenzen, weisen jeweils eine Fügekontur 56 auf, welche wiederum als zwei Zapfen ausgebildet ist. Die Zapfen hintergreifen die Pollaschen 21 der entsprechenden Statorzähne 16 im Montagezustand, so dass ein Formschluss bezüglicher der Axialrichtung A gebildet ist.

Das Versteifungselement 42 ist hierbei aus einem nicht magnetischen Edelstahl gebildet. Vor einer Erstmontage stehen die Zapfen senkrecht zur stimseitigen Schmalseite 54 ab. Im Zuge der Montage werden die Zapfen zur Herstellung des Formschlusses in Umfangsrichtung U verbogen

Das Versteifungselement 42 ist hier einteilig und symmetrisch ausgeführt. Dabei ist das Versteifungselement 42 spiegelsymmetrisch bezüglich einer Ebene, welche durch die Mittelsenkrechte der Breitseite 50 und parallel zur stimsteigen Schmalseite 54 verläuft, und ebenfalls spiegelsymmetrisch bezüglich einer Ebene, welche durch die Mittelsenkrechte der Breitseite 50 und parallel zur ersten Schmalseite 52 gebildet ist.

Ferner weist das Versteifungselement 42 Durchgangsöffnungen 58 auf, welche als in die Breitseite 50 eingebrachte, durchgehende Bohrungen ausgeführt sind. Im Montagezustand münden diese in die entsprechende Statornut 44, Mittels der Durchgangsöffnungen 58 sind Wirbelstromverluste verringert. Des Weiteren ermöglichen die Durchgangsöffnungen 58 eine Luftzirkulation, insbesondere zur Kühlung.

Die Figuren 7a, b zeigen eine alternative Ausgestaltung des Versteifungselements 42. Dieses ist aus einem Kunststoff gebildet. Die jeweils als zwei Zapfen ausgebildeten Fügekonturen 56 sind dabei, insbesondere bereits vor der Montage, in einer Ebene parallel zur Breitseite 50 freiendseitig voneinander weg geneigt. Aufgrund der Ausführung aus Kunststoff sind die Zapfen federelastisch verformbar, so dass diese Im Zuge der Montage vorübergehend verformt werden und nach erfolgter Montage aufgrund deren Neigung die entsprechenden Pollaschen 21 hintergreifen.

Ferner weist diese Kunststoffvariante des Versteifungselements 42 eine Dicke auf, welche größer ist als die Ausdehnung der Nut 44 in Radialrichtung R. Insbesondere ist auf diese Weise ist das Versteifungselement 42 und somit der Stator 6 steifer ausgebildet. Lediglich in den Bereichen der ersten Schmalseiten 52 ist das Versteifungselement 42 verjüngt, so dass dieses dort eine zur Ausdehnung der Nut 44 in Radialrichtung R korrespondierende Dicke aufweist und in die Nut eingebracht oder eingepresst werden kann.

Die Erfindung ist nicht auf die vorstehend beschriebenen Ausführungsbeispiele beschränkt. Vielmehr können auch andere Varianten der Erfindung vom Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung zu verlassen.

### Bezugszeichenliste

- 1: Kühlerlüfter
- 2: Elektromotor
- 4: Rotor
- 6: Stator
- 8: Achsstift
- 10: Lager
- 11: Lüfterrad
- 12: Luftleitschaufel
- 13: Kappe
- 14: Motorträger
- 15: Flansch
- 16: Elektronikfach
- 17: Motorelektronik
- 18: Elektronikfachdeckel
- 19: Statorjoch
- 20: Statorzahn
- 21: Pollasche
- 22: Blechpaket
- 23: Kunststoffumspritzung
- 24: Statornut
- 25: Spule
- 26: Anschlüsse
- 30: Nutenschlitz
- 32: Einzelblech
- 34: Jochabschnitt
- 36: Blechzahn
- 38: Blechlasche
- 42: Versteifungselement
- 43: Anlageschulter
- 44: Nut
- 46: Nutenwand
- 48: Anlage
- 50: Breitseite
- 52: erste Schmalseite
- 54: stimseitige/zweite Schmalseite
- 56: Fügekontur
- 58: Durchgangsöffnungen
- 60: Steg
- 62: horizontaler T-Schenkel
- 64: vertikaler T-Schenkel
- 66: vertikaler H-Schenkel

- A: Axialrichtung
- D: Drehachse
- R: Radialrichtung
- U: Umfangsrichtung

## Patentansprüche

1. Elektromotor (2), aufweisend einen um eine in Axialrichtung (A) verlaufende Drehachse (D) drehbar gelagerten Rotor (4) und einen Stator (6) mit einem Blechpaket (22), welches ein Statorjoch (19) und von diesem radial gerichtete Statorzähne (20) des Stators (6) bildet,
- wobei die Statorzähne (20) unter Bildung von sich in Umfangsrichtung(U) des Stators (6) erstreckenden Pollaschen (21) zahnfußseitig T-förmig erweitert sind,
- wobei die Pollaschen (21) jeweils eine Anlageschulter (43) bilden,
- wobei zwischen benachbarten Statorzähnen (20) jeweils eine Statornut (24) zur Aufnahme von Spulen (25) einer Statorwicklung und zwischen einander zugewandten Pollaschen (21) jeweils ein Nutenschlitz (30) gebildet ist,
- wobei eine Anzahl von Versteifungselementen (42) vorgesehen ist, die in eine entsprechende Anzahl von Nutenschlitzen (30) eingebracht sind, und
- wobei die Versteifungselemente (42) an den einander zugewandten Pollaschen (21) benachbarter Statorzähne (20) in Radialrichtung (R) mittels der Anlageschultern (43) gehalten sind,
**dadurch gekennzeichnet,**
- **dass** das Versteifungselement (42) an beiden stirnseitigen Schmalseiten(54) jeweils eine Fügekontur (56) für einen Formschluss bezüglich der Axialrichtung (A) mit der jeweiligen Pollasche (21) aufweist,
wobei das Versteifungselement (42) spiegelsymmetrisch zur Längs- und Querachse ausgeführt ist.
wobei die Fügekontur (56) als Zapfen ausgebildet ist, welche im Montagezustand mit den Pollaschen (21) einen Hintergriff ausbilden.

2. Elektromotor (2) nach Anspruch 1,
**dadurch gekennzeichnet,**
**dass** das Blechpaket (22) aus einer Anzahl von Einzelblechen (32) gebildet ist,
- wobei jedes Einzelblech (32) einen ringförmigen Jochabschnitt (34) und mit diesem einteilige, radial gerichtete Blechzähne (36) aufweisen, die zahnfußseitig unter Bildung von sich in Umfangsrichtung (U) des Stators (6) erstreckenden Blechlaschen (38) T-förmig erweitert sind, und
- wobei das Statorjoch (34) aus den Jochabschnitten (34) der Einzelbleche (32), die Statorzähne (20) aus den Blechzähnen (36) der Einzelbleche (32) und die Pollaschen (21) aus den Blechlaschen (38) der Einzelbleche (32) gebildet sind.

3. Elektromotor (2) nach Anspruch 1 oder 2,
**dadurch gekennzeichnet,**
**dass** die Pollaschen (21) freiendseitig eine In Umfangsrichtung (U) offene und sich in Axialrichtung (A) erstreckende Nut (44) aufweisen, wobei die jeweilige Anlageschulter (43) für das Versteifungselements (42) von einer der Nutenwände (46) der Nut (44) gebildet ist.

4. Elektromotor (2) nach einem der Ansprüche 1 bis 3,
**dadurch gekennzeichnet,**
**dass** der Stator (6), insbesondere dessen Blechpaket (22), eine Kunststoffumspritzung (23) aufweist, mittels welcher die Anlageschulter (43) oder die Nut (44) vollständig oder tellweise gebildet ist.

5. Elektromotor (2) nach einem der Ansprüche 1 bis 4,
**dadurch gekennzeichnet.**
**dass** das Versteifungselement (42) als, insbesondere rechteckförmiges, vorzugsweise zur Längs- und Querachse spiegelsymmetrisches, platten- oder plättchenartiges Bauteil ausgeführt ist.

6. Elektromotor (2) nach einem der Ansprüche 1 bis 5,
**dadurch gekennzeichnet.**
**dass** das Versteifungselement (42) aus einem nicht magnetischen Material gebildet ist.

7. Elektromotor (2) nach einem der Ansprüche 1 bis 6.
**dadurch gekennzeichnet,**
**dass** das Versteifungselement (42) mit mindestens einer in die jeweilige Statomut (24) mündenden Durchgangsöffnung (58) versehen ist.

8. Kühlerlüfter (1), insbesondere für ein Kraftfahrzeug, mit einem Elektromotor (2) nach einem der Ansprüche 1 bis 7.

## Claims

1. Electric motor (2), comprising a rotor (4) mounted rotatably about an axis of rotation (D) that extends in the axial direction (A), and comprising a stator (6) with a laminated core (22), said laminated core (22) forming a stator yoke (19) and stator teeth (20) of the stator (6) being radially directed from said stator yoke (19),
- wherein the stator teeth (20) are extended on the tooth root side in a T-shape to form pole lugs (21) extending in the circumferential direction (U) of the stator (6),
- wherein the pole lugs (21) each form an abutment shoulder (43),
- wherein a respective stator slot (24) for receiving coils (25) of a stator winding is formed between adjacent stator teeth (20) and a respective groove slot (30) is formed between pole lugs (21) that face each other,
- wherein a plurality of stiffening elements (42) is provided, which are inserted into a corresponding plurality of groove slots (30), and
- wherein the stiffening elements (42) are held on the pole lugs (21) of adjacent stator teeth (20) in the radial direction (R) by means of the abutment shoulders (43), said pole lugs (21) facing each other, **characterized in**
- **that** the stiffening element (42), on each of the two narrow end faces (54), respectively comprises a joining contour (56) for a form fit with respect to the axial direction (A) with the respective pole lugs (21),
wherein the stiffening element (2) is designed to be mirror-symmetrical with respect to the longitudinal and to the transverse axe,
wherein the joining contour (56) is configured as pins, which, in the assembled state, form a rear grip with the pole lugs (21).

2. Electric motor (2) according to claim 1,
**characterized in**
**that** the laminated core (22) is formed from a plurality of individual sheets (32),
- wherein each individual sheet (32) comprises an annular yoke section (34) and radially directed sheet metal teeth (36), which are integral with said annular yoke section (34) and are widened in a T-shape on the tooth root side to form sheet metal lugs (38), and
- wherein the stator yoke (34) is formed from the yoke portions (34) of the individual laminations (32), the stator teeth (20) are formed from the sheet metal teeth (36) of the individual sheets (32) and the pole lugs (21) are formed from the sheet metal lugs (38) of the individual laminations (32).

3. Electric motor (2) according to claim 1 or 2,
**characterized in**
**that** the pole lugs (21) at the free-end side comprise a groove (44), which is open in the circumferential direction (U) and extends in the axial direction (A), wherein the respective abutment shoulder (43) for the stiffening element (42) is formed by one of the groove walls (46) of the groove (44).

4. Electric motor (2) according to one of claims 1 to 3,
**characterized in**
**that** the stator (6), in particular its laminated core (22), comprises a plastic encapsulation (23), by means of which the abutment shoulder (43) or the groove (44) is formed completely or partially.

5. Electric motor (2) according to one of the claims 1 to 4,
**characterized in**
**that** the stiffening element (42) is configured as a plate-like or platelet-like component, in particular rectangular, preferably mirror-symmetrical with respect to the longitudinal and transverse axes.

6. Electric motor (2) according to one of claims 1 to 5,
**characterized in**
**that** the stiffening element (42) is formed from a non-magnetic material.

7. Electric motor (2) according to one of claims 1 to 6,
**characterized in**
**that** the stiffening element (42) is provided with at least one through-opening (58) opening into the respective stator slot (24).

8. Radiator cooling fan (1), in particular for a motor vehicle, with an electric motor (2) according to one of claims 1 to 7.

## Revendications

1. Moteur électrique (2), comprenant un rotor (4) monté à rotation autour d'un axe de rotation (D), ladite axe de rotation (D) s'étendant dans la direction axiale (A), et comprenant un stator (6) avec un paquet de tôles (22), ledit paquet de tôles (22) formant une culasse de stator (19) et des dents de stator (20) du stator (6) orientées radialement à partir de celle-ci,
- dans lequel les dents de stator (20) sont élargies en forme de T du côté de la racine des dents pour former des pattes polaires (21) s'étendant dans la direction circonférentielle (U) du stator (6),
- dans lequel les pattes polaires (21) forment chacune un épaulement de butée (43),
- dans lequel entre des dents de stator adjacentes (20) une rainure de stator (24) respective pour recevoir des bobines (25) d'un enroulement statorique est formée et entre des pattes polaires (21) se faisant face une rainure respective (30) est formée,
- dans lequel un nombre d'éléments de raidissement (42) est prévu, qui sont insérés dans un nombre correspondant de rainures (30), et
- dans lequel, sur les pattes polaires (21) se faisant face des dents (20) adjacentes de stator, les éléments de raidissement (42) sont maintenus dans la direction radiale (R) au moyen des épaulements de butée (43),
**caractérisé en ce**
**que** l'élément de raidissement (42) comprend, sur les deux côtés étroit d'extrémité (54), un contour de liaison (56) pour un ajustement de forme par rapport à la direction axiale (A) avec la patte polaire (21) respective,
dans lequel l'élément de raidissement (2) est conçu pour être symétrique par rapport à l'axe longitudinal et à l'axe transversal,
dans lequel le contour de liaison (56) est réalisé sous la forme d'un tourillon, qui, à l'état assemblé, forme un engagement par l'arrière avec les pattes polaires (21).

2. Moteur électrique (2) selon la revendication 1,
**caractérisé en ce**
**que** le paquet de tôles (22) est formé d'un nombre de tôles individuelles (32),
- dans lequel chaque tôle individuelle (32) comprend une section de culasse (34) annulaire et des dents de tôle (36) orientées radialement, qui sont d'un seul tenant avec ladite section de culasse (34) annulaire et sont élargies en forme de T du côté de la racine des dents pour former des pattes de tôle (38), et
- dans lequel la culasse du stator (34) est formée à partir des sections de fourche annulaire (34) des tôles individuelles (32), les dents de stator (20) sont formées à partir des dents de tôle (36) des tôles individuelles (32) et les pattes polaires (21) sont formées à partir des pattes de tôle (38) des tôles individuelles (32).

3. Moteur électrique (2) selon la revendication 1 ou 2,
**caractérisé en ce**
**que** les pattes polaires (21) comprennent du côté de l'extrémité libre une rainure (44) ouverte dans la direction périphérique (U) et s'étendant dans la direction axiale (A), dans lequel l'épaulement de butée (43) respectif pour l'élément de raidissement (42) est formé par une des parois de rainure (46) de la rainure (44).

4. Moteur électrique (2) selon l'une des revendications 1 à 3,
**caractérisé en ce**
**que** le stator (6), en particulier son paquet de tôles (22), comporte une enveloppe en matière plastique (23), par laquelle l'épaulement de butée (43) ou la rainure (44) est formé(e) entièrement ou partiellement.

5. Moteur électrique (2) selon l'une des revendications 1 à 4,
**caractérisé en ce**
**que** l'élément de raidissement (42) est conçu comme un élément en forme de plaque ou de plaquette, en particulier rectangulaire, de préférence symétrique par rapport aux axes longitudinal et transversal.

6. Moteur électrique (2) selon l'une des revendications 1 à 5,
**caractérisé en ce**
**que** l'élément raidisseur (42) est formé d'un matériau non magnétique.

7. Moteur électrique (2) selon l'une des revendications 1 à 6,
**caractérisé en ce**
**que** l'élément de raidissement (42) est pourvu d'au moins une ouverture traversante (58) débouchant dans la rainure de stator (24) respective.

8. Ventilateur de refroidissement (1), en particulier pour un véhicule automobile, avec un moteur électrique (2) selon l'une des revendications 1 à 7.
